# EUROPÄISCHE PATENTSCHRIFT

(11) **EP 1 194 323 B1**
(45) Veröffentlichungstag und Bekanntmachung des Hinweises auf die Patenterteilung: **20.08.2003**
(21) Anmeldenummer: 00936864.8
(22) Anmeldetag: 06.06.2000
(51) Int. Cl.: B61D 17/10, B62D 31/00

(54) **ANSCHLUSS FÜR FUSSBODENBELAG IN FAHRZEUGEN, INSBESONDERE SCHIENENFAHRZEUGE**
CONNECTION FOR FLOOR COVERING IN VEHICLES, IN PARTICULAR, IN RAIL VEHICLES
RACCORD DE GARNITURE DE REVETEMENT DE SOL DE VEHICULES, EN PARTICULIER DE VEHICULES SUR RAILS

(30) Priorität: 09.06.1999 DE 19927003
(43) Veröffentlichungstag der Anmeldung: 10.04.2002
(73) Patentinhaber: Bombardier Transportation GmbH, 13627 Berlin (DE)
(72) Erfinder: MARTENS, Holger, D-13187 Berlin (DE); ERLER, Gerald, D-16547 Birkenwerder (DE)
(74) Vertreter: Cohausz & Florack
(86) Internationale Anmeldenummer: EP0005188
(87) Internationale Veröffentlichungsnummer: WO00076823

(56) Entgegenhaltungen:
- EP-A- 0 787 636
- DE-A- 2 251 170
- DE-A- 3 115 699

## Beschreibung

Die Erfindung betrifft einen Fahrzeugaufbau mit einem Anschluß für einen Fußbodenbelag, insbesondere für Schienenfahrzeuge zur Personenbeförderung, mit einer starren, auf Längsträgern sich abstützenden Bodenprofilplatte, auf der der Fußbodenaufbau und sonstige Einbauteile anbringbar sind, wobei der Fußbodenbelag auf den Fußbodenplatten ganzflächig auflagert und wannenförmig an den am Rohbau des Fahrzeugaufbaus befestigten An- und Einbausektionen, beispielsweise Schrank- und Seitenwandverkleidungen, Sitzgestelle und Trennwände, des Fahrzeugaufbaus hochgezogen ist.

Aus der DE 31 15 699 C2 ist ein Fußboden eines Fahr-, insbesondere Schienenfahrzeuges bekannt, das einen Fußbodenträger aufweist, auf dem Befestigungsschienen zur Verankerung von Einbauteilen angeordnet und unabhängig von den Befestigungsschienen zwischen diesen Fußbodenplatten abgestützt sind. Der Fußbodenträger ist mit einer durchgehenden Auflagefläche ausgebildet und die Fußbodenplatten sind ganzflächig auf einer auf dem Fußbodenträger aufliegenden Isolationsschicht abgestützt.
Der Randbereich des verlegten Fußbodenbelages ist wannenförmig ausgebildet. Dazu besitzt der Längsträger eine in den Innenraum des Fahrzeuges in Längsrichtung verlaufende abgerundete Auflagefläche, die bündig mit den Deckplatten des Fußbodenaufbau abschließt und eine ganzflächige Auflagefläche bildet, so daß der darauf verlegte Fußbodenbelag an den Längsseiten hochgezogen ist.

Diesem bekannten Stand der Technik haftet der Nachteil an, daß der Fußbodenaufbau, insbesondere über den Fußbodenbelag starr mit dem Rohbau wie

Längsträger, Seitenwände o. dgl. verbunden ist. Auftretende Toleranzen im Innenaufbau von Schienenfahrzeugen können nicht ausgeglichen werden.
Die Kräfte der Anbauteile werden in den Fußboden eingeleitet und belasten diesen einseitig.

Bei diesem Stand der Technik liegt der Erfindung die Aufgabe zugrunde, durch einen schwimmenden Fußbodenaufbau auftretende Toleranzen des Innenausbaus bei Schienenfahrzeugen auszugleichen und eine kräfteabbauende Relativbewegung zwischen den fest am Rohbau montierten Einbauteilen wie Sitzen, Rückwänden, Schränken usw. und dem Fußboden zuzulassen, wobei das Eindringen von Feuchtigkeit zwischen dem sich relativ bewegenden Fußboden und den am Rohbau befestigten An- und Einbausektionen sicher ausgeschlossen wird.

Diese Aufgabe wird durch einen Fahrzeugaufbau der eingangs genannten Art mit den kennzeichnenden Merkmalen des Anspruches 1 gelöst. Vorteilhafte Ausgestaltungen sind den Unteransprüchen entnehmbar.

Der erfindungsgemäße Fahrzeugaufbau ermöglicht es, den Fußboden völlig frei schwimmend auszubilden. Dies hat den Vorteil, daß auftretende Spannungen zwischen den Bauteilen durch die Relativbewegung des Fußbodens in Längs- und Querrichtung abgebaut werden können. Die Kräfte aus angrenzenden Bauteilen, insbesondere Sitze und Schränke usw., werden unabhängig vom Fußboden in den Wagenkasten geleitet. Den horizontalen Toleranzausgleich übernimmt ein Dichtprofil, das an den am Rohbau befestigten Anund Einbausektionen gleitet und zugleich sicherstellt, daß keine Feuchtigkeit, beispielsweise Reinigungswasser, in angrenzende Baugruppen eindringen kann.
Der erfindungsgemäße Fahrzeugaufbau mit einem Anschluß für einen Fußbodenbelag ist einfach und kompakt im Aufbau sowie zugleich montagefreundlich und somit variabel den verschiedendsten Einbausituationen anpaßbar.

Ein Ausführungsbeispiel der Erfindung ist nachstehend anhand der Zeichnungen veranschaulicht.

Es zeigt:
- Fig. 1: einen Fußbodenanschluß nach dem Stand der Technik und
- Fig. 2: eine Schnittdarstellung des erfindungsgemäßen Fußbodenanschlusses.

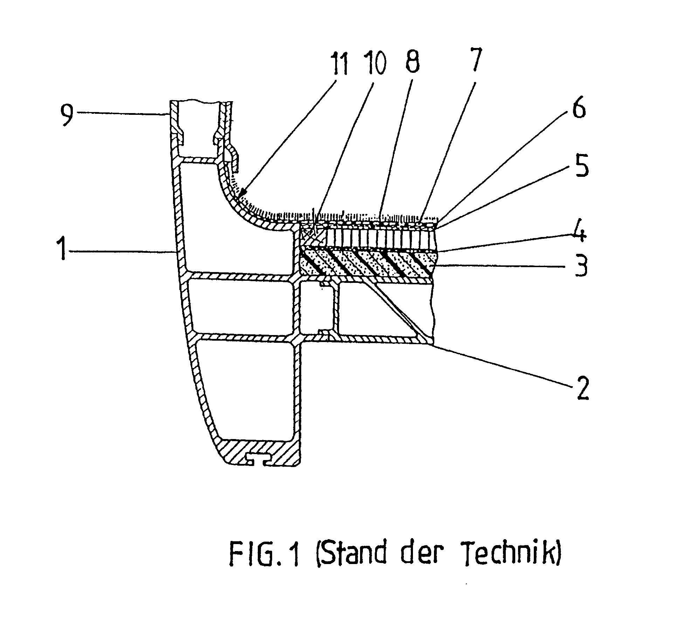

In Fig. 1 ist ein Fußbodenanschluß nach dem Stand der Technik gezeigt. An den Längsträgern **1** stützt sich eine Bodenprofilplatte **2** ab, auf der ein Fußbodenaufbau bestehend aus einer Isolationsschicht **3,** Deckplatten **4,** Fußbodenplatten **5** und **6,** einem PVC-Bodenbelag **7** und einem Teppichboden **8,** montiert ist. Im Seitenbereich des Fußbodens ist als Übergang zur Seitenwand **9** ein aus Holz hergestellter Rahmen **10** angeordnet. Der Längsträger **1** besitzt eine nach innen gerichtete abgerundete Auflagefläche **11**, die bündig zum Bodenbelag **7** verläuft. Der Bodenbelag **7** und der Teppichboden **8** ist wannenförmig hochgezogen und liegt auf der Auflagefläche **11** auf. Somit hat der Bodenbelag **7** und der Teppichboden **8** eine starre Verbindung zum Längsträger **1** und läßt keine Verschiebung in Längs- und Querrichtung zu. Ebenso ist ein horizontaler Toleranzausgleich nicht möglich.

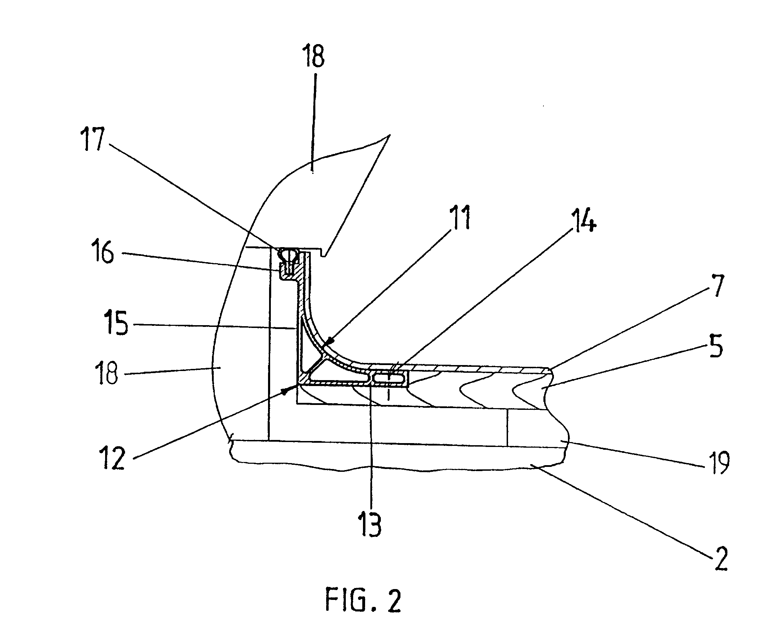

Die Fig 2 zeigt den erfindungsgemäßen Fußbodenanschluß. Die auf dem Fußbodenauflagerelement **19** liegenden Fußbodenplatten **5** tragen an ihren Enden ein längs zu den am Rohbau befestigten Anund Einbausektionen **18** verlaufendes Hohlkammer-Eckprofil **12,** dessen einer Schenkel **13** in den Fußbodenplatten **5** eingesetzt und durch Schrauben oder Niete **14** befestigt ist. Der andere Schenkel 15 ragt gegenüber dem Schenkel **13** vertikal auf und bildet mit diesem die nach innen gerichtete abgerundete Auflagefläche **11** für den Bodenbelag **7**. Die wannenförmige Auflagefläche **11** schließt bündig mit der Oberfläche der Fußbodenplatten **5** ab, so daß der Bodenbelag **7** in Längsrichtung entlang des Hohlkammer-Eckprofils **12** hochgezogen verlegt und mit der Auflagefläche **11** verklebt werden kann. Der aufragende Schenkel **15** des Hohlkammer-Eckprofils **12** besitzt auf seiner Rückseite eine Nut **16,** in welcher ein Gummidichtprofil **17** eingesetzt ist. Das Gummidichtprofil **17** dichtet gegenüber den am Rohbau befestigten An- und Einbausektionen **18** ab. Der Schenkel **15** des Hohlkammer-Eckprofils **12** ist somit in Längsrichtung und Querrichtung verschieblich und in der Lage, horizontale Toleranzen des Rohund Innenausbaus problemlos aufzunehmen, weil es keine feste Verbindung zu den angrenzenden An- und Einbausektionen **18** (Baugruppen) besitzt.

### Liste der Bezugszeichen:

- **1**: Längsträger
- **2**: Bodenprofilplatte
- **3**: Isolationsschicht
- **4**: Deckplatten
- **5, 6**: Fußbodenplatte
- **7**: Bodenbelag
- **8**: Teppichboden
- **9**: Seitenwand
- **10**: Holzrahmen
- **11**: wannenförmige Auflagefläche
- **12**: Hohlkammer-Eckprofil
- **13**: Schenkel von 12
- **14**: Verbindungsmittel, Schraube
- **15**: Schenkel von 12
- **16**: Nut
- **17**: Dichtung, Gummidichtprofil
- **18**: An- und Einbausektionen
- **19**: Fußbodenauflageelement

## Patentansprüche

1. Fahrzeugaufbau mit einem Anschluß für einen Fußbodenbelag (**7**), insbesondere für Schienenfahrzeuge zur Personenbeförderung, mit einer starren, auf Längsträgern (**1**) sich abstützenden Bodenprofilplatte (**2**), auf der der Fußbodenaufbau und sonstige Einbauteile anbringbar sind, wobei der Fußbodenbelag (**7**) auf den Fußbodenplatten (**5**) ganzflächig auflagert und wannenförmig an den am Rohbau des Fahrzeugaufbaus befestigten An- und Einbausektionen (**18**), beispielsweise Schrank- und Seitenwandverkleidungen, Sitzgestelle und Trennwände, des Fahrzeugaufbaus hochgezogen ist,
**dadurch gekennzeichnet,**
**daß** zwischen den am Rohbau befestigten An- und Einbausektionen (**18**) und der Fußbodenplatte (**5**) ein an den Sektionen längs und quer verlaufendes, eine Auflagefläche (**11**) für den Fußbodenbelag bildendes Eckprofil (**12**) angeordnet ist, das einerseits mit seinem einen Schenkel (**13**) den Randabschluß der Fußbodenplatten (**5**) zur Aufnahme des Fußbodenbelages bildet und andererseits mit seinem anderen Schenkel (**15**) gegenüber dem Rohbau in Längs- und Querrichtung verschieblich angeordnet ist, wobei der horizontale Toleranzausgleich von einer am Schenkel (**15**) befestigten, am Rohbau anliegenden elastische Dichtung (**17**) aufnehmbar ist.

2. Fahrzeugaufbau nach Anspruch 1,
**dadurch gekennzeichnet,**
**daß** das Eckprofil (**12**) als ein Hohlkammer-Profil ausgebildet ist.

3. Fahrzeugaufbau nach Anspruch 1 und 2,
**dadurch gekennzeichnet,**
**daß** der eine Schenkel (**13**) des Eckprofils (**12**) in der Fußbodenplatte (**5**) einliegt und mit dieser durch ein Befestigungsmittel (**14**), vorzugsweise Schraube oder Niet, verbunden ist.

4. Fahrzeugaufbau nach Anspruch 1 und 2,
**dadurch gekennzeichnet,**
**daß** der andere Schenkel (**15**) des Eckprofils (**12**) auf seiner Rückseite eine Nut (**16**) für die Aufnahme der Dichtung (**17**) aufweist.

5. Fahrzeugaufbau nach Anspruch 4,
**dadurch gekennzeichnet,**
**daß** die Dichtung (**17**) eine Gummiprofildichtung ist.

6. Fahrzeugaufbau nach Anspruch 1 bis 4,
**dadurch gekennzeichnet,**
**daß** das Eckprofil (**12** ) aus Aluminium besteht.

## Claims

1. Vehicle structure with a connection for a floor covering (7), in particular for railway vehicles *for* the transport of passengers, with a rigid bottom profile plate (2) supported on longitudinal girders (1), on which bottom profile plate the floor construction and other installation parts can be installed, whereby the floor covering (7) is supported over the entire surface of the floor plates (5) and is elevated in a dished shape at the attachments and installations sections (18), for example cabinet coverings, side wall coverings, seat frames and partitions of the vehicle structure, fastened to the bodywork of the vehicle structure,
**characterized by** the fact
that between the attachments and installations sections (18) that are fastened to the bodywork and the floor plate (5), there is a corner profile (12) that runs longitudinally and transversely with respect to the sections and forms a bearing surface (11) for the floor covering, which corner profile forms on one hand with its one leg (13) the terminal edge of the floor plates (5) to receive the floor covering, and on the other hand is movable with its other leg (13) with respect to the bodywork in the longitudinal and transverse direction, whereby the horizontal tolerance equalization can be absorbed by an elastic seal (17) that is fastened to the leg (15) and is in contact with the bodywork.

2. Vehicle structure as claimed in Claim 1,
**characterized by** the fact that the corner profile (12) is realized in the form of a hollow chamber profile.

3. Vehicle structure as claimed in Claims 1 and 2,
**characterized by** the fact that the one leg (13) of the corner profile (12) sits inside the floor plate (5) and is connected to the floor plate (5) by fastening means (14), preferably a bolt or rivet.

4. Vehicle structure as claimed in Claims 1 and 2,
**characterized by** the fact that the other leg (15) of the corner profile (12) has a groove (16) on its back side to receive the seal (17).

5. Vehicle structure as claimed in Claim 4,
**characterized by** the fact that the seal (17) is a rubber profile seal.

6. Vehicle structure as claimed in Claims 1 to 4,
**characterized by** the fact that the corner profile (12) is made of aluminum.

## Revendications

1. Structure de véhicule avec un raccord pour une garniture de plancher (7), en particulier pour véhicules sur rails destinés au transport de personnes, présentant une plaque profilée de plancher (2) rigide en appui sur des longerons (1) sur laquelle peuvent être posés la structure de plancher et d'autres éléments à encastrer, la garniture de plancher (7) reposant sur toute sa surface sur les plaques de plancher (5), et étant relevée en forme de vasque au niveau des sections à appliquer et à encastrer (18) sur l'ossature de la structure de véhicule, par exemple des habillages de coffrets et de parois latérales, carcasses de sièges et cloisons de séparation, de la structure de véhicule, **caractérisée en ce qu'**entre les sections à appliquer et à encastrer (18) sur l'ossature et la plaque de garniture de plancher (5), on dispose un profilé d'angle (12) orienté longitudinalement et transversalement par rapport aux sections qui forme une surface d'appui (11) pour la garniture de plancher, et qui, d'une part, par l'une de ses ailes (13), forme la finition en bordure des plaques de garniture de plancher (5) recevant la garniture de plancher et, d'autre part, par son autre aile (15), peut coulisser longitudinalement et transversalement par rapport à l'ossature, la compensation horizontale des tolérances pouvant être encaissée par un joint élastique (17) fixé sur l'aile (15) et contigu à l'ossature.

2. Structure de véhicule selon la revendication 1, **caractérisée en ce que** le profilé d'angle (12) est réalisé sous forme de profilé à chambre creuse.

3. Structure de véhicule selon la revendication 1 et 2, **caractérisée en ce que** l'une des ailes (13) du profilé d'angle (12) est logée dans la plaque de garniture de plancher (5) et est raccordée à cette dernière par un élément de fixation (14), de préférence vis ou rivet.

4. Structure de véhicule selon la revendication 1 et 2, **caractérisée en ce que** l'autre aile (15) du profilé d'angle (12) présente sur sa face dorsale, une rainure (16) dans laquelle vient se loger le joint (17).

5. Structure de véhicule selon la revendication 4, **caractérisée en ce que** le joint (17) est un joint profilé en caoutchouc.

6. Structure de véhicule selon la revendication 1 à 4, **caractérisé en ce que** le profilé d'angle (12) est en aluminium.
